# EUROPEAN PATENT SPECIFICATION

(11) **EP 2 974 523 B1**
(45) Date of publication and mention of the grant of the patent: **12.04.2017**
(21) Application number: 13818477.5
(22) Date of filing: 27.11.2013
(51) Int. Cl.: H05B 3/40, H01G 7/04

(54) **INFRARED RADIATION DEVICE, METHOD OF MANUFACTURING AND USE OF THE INFRARED RADIATION DEVICE**
INFRAROTSTRAHLUNGSVORRICHTUNG, VERFAHREN ZUR HERSTELLUNG UND VERWENDUNG DER INFRAROTSTRAHLUNGSVORRICHTUNG
DISPOSITIF DE RAYONNEMENT INFRAROUGE, PROCÉDÉ DE FABRICATION ET D'UTILISATION DE DISPOSITIF DE RAYONNEMENT INFRAROUGE

(30) Priority: 27.11.2012 NL 2009890
(43) Date of publication of application: 20.01.2016
(73) Proprietor: Biesbrouck, Louis, 1112 DH Diemen (NL); Nusse, Robert, 1705 MJ Heerhugowaard (NL)
(72) Inventor: NUSSE, Robert, NL-1705 MJ Heerhugowaard (NL)
(74) Representative: Algemeen Octrooi- en Merkenbureau B.V.
(86) International application number: PCT/NL2013/050853
(87) International publication number: WO 2014/084729

(56) References cited:
- EP-A2- 2 157 831
- DE-A1- 2 707 244
- GB-A- 190 916 547
- US-A- 3 065 436
- US-A- 5 907 663

## Description

### Technical Field

This invention relates in general to infrared radiation and, more particularly, to an infrared radiation device, a method for manufacturing the infrared radiation device and use of the infrared radiation device, in particular for growing plants including any of flowers, vegetables, or fruits, and for the infrared radiation of a subject.

### Background

Infrared, IR, radiation is a type of electromagnetic radiation with longer wavelengths than those of visible light, ranging from the red coloured end of the visible spectrum at about 740 nanometres, nm, to about 1000 micrometres, µm. Infrared radiation is applied in industrial, agricultural, scientific, and medical applications, for example.

Infrared radiation can be used as a heating source in that molecules of an object subjected to infrared radiation change their rotational-vibrational movements. Infrared radiation is gaining popularity as a heat therapy method of natural health care and physiotherapy.

Plants grown indoors, for example, may grow well under fluorescent lights, but will not bloom until appropriate levels of infrared radiation have been introduced. Too much infrared radiation, especially in the far red end of the spectrum, may actually damage plants, either grown indoors or outdoors, and/or may also cause plants to experience early growth spurts that reduce their health, or encourage them to flower too soon.

Ice on roadways is probably the most serious meteorological hazard faced by road users, and causes hundreds of serious injuries and several tragic deaths a year. Infrared radiation may also be used for heating roads or pavements, to prevent icing, for example.

In the fields of IR radiation applications mentioned above, and in general when applying infrared radiation or heating, a correct infrared balance is important and efficiency is achieved by matching the wavelength of the infrared radiation device to the absorption characteristics of a subject or material subjected to infrared radiation.

The document DE 27 07 244 A1 discloses an infrared radiation device according to the preamble of claim 1.

### Summary

It is an object of the present invention to provide a versatile infrared radiation device. It is a further object of the present invention to provide a method for manufacturing this infrared radiation device.

In a first aspect there is provided an infrared radiation device, comprising an electrically isolating bearer having a plurality of spaced apart electric conductors forming an electric resistance radiation element for emitting infrared radiation when powered by an electric power source. The device comprises a housing having a circumferential wall of fluid tight material enclosing an inner opening. The bearer and a core material are received in the inner opening of the housing such that the core material and the carrier extend in the housing and the core material, by filling up the inner opening of the housing, holds the bearer in mechanical contact with at least part of the wall of the housing in circumferential direction thereof.

The invention is based on the insight that the amount and wavelength of infrared radiation generated by an electric resistance heating, for obtaining a correct infrared balance and absorption efficiency when radiating a body, can be relatively easily controlled by controlling the electric power applied to the resistance heating. However, when applying electric equipment, to avoid hazards and unwanted or detrimental electric effects in the equipment, in particular when subjecting the electric equipment to moisture and/or when applying the electric equipment at the human or animal body, for example, fluid-tightness, in particular liquid-tightness, of the equipment is required.

The infrared radiation device according to the invention combines, in a relative simple construction, both radiation control and safety requirements, thereby providing a versatile deployment of the device. To achieve an optimal operation efficiency and control of the amount of radiation provided by the device, the inventors noted that the electric resistance heating should be as close as possible to the wall, or at least part of the wall of the housing in circumferential direction thereof, viewed from the inner opening of the housing. This is achieved in that the core material and the bearer are received in the inner opening of the housing, such that the core material holds the bearer in mechanical contact with at least part of the inner wall of the housing.

The infrared radiation device according to the present invention, in view of its relative simple and cost efficient construction and because the device may be exposed to external fluids or moisture, such as rain and ground water, is excellently suitable for subjecting many different types of relatively large objects to infrared radiation and heat, such as plants and bushes, but also sports fields, (rail)roads, pavements, etc.

Traditionally, for the type of applications mentioned in the previous paragraph, for providing infrared radiation, a pipe filled with heat water delivered by a heating source, such as a boiler or the like, is used. It will be appreciated that the infrared radiation emitted by the end of such a pipe, or a pipe in a cascade of pipes, which is closest to the heat source will differ from the radiation emitted at an opposite end of a pipe or a pipe in a cascade of pipes remote from the heating source. This, obviously, due to a temperature decrease, i.e. cooling, of the water along the pipe.

In an embodiment of the invention, the infrared radiation device comprises an elongated housing having a first end and a second end, wherein the bearer and the core material extend in longitudinal direction of the elongated housing.

The construction of the infrared radiation device according to invention is very suitable for use with elongated housings, in that the infrared radiation generated by the electric resistance heating extending in longitudinal direction of the housing, in terms of amount of radiation and wavelength, is emitted in a substantially uniform manner over the length of the elongated housing of the infrared radiation device.

In order to maintain scalability of the infrared radiation device such that it may not only be used for different objects, but also for similar objects having a different size, the inventors realized that inter-connectability of multiple infrared radiation devices is of importance. By equipping a first end of a first infrared radiation device with fluid-tight coupling means for fluid-tight coupling with fluid-tight coupling means on a second end of a second infrared radiation device, an easily scalable infrared radiation device is realised. For the purpose of the invention, suitable mating fluid-tight coupling means are, for example, provided by mating threaded or bayonet type coupling means or by gluing together of tightly mating housing ends.

For an easy electric coupling of the resistance radiation elements of interconnected radiation devices, in an embodiment of the invention comprising an elongated housing having a first end and a second end, the isolating bearer comprises first and second power lines for powering the plurality of electric conductors, wherein the first end and the second end of the housing comprise mating electrical connecting means connected to the respective power lines of the bearer, for electrically connecting the power lines at a first end of the housing of a first radiation device with the power lines at a second end of the housing of a second radiation device.

Integrating the electric power lines in the bearer has the beneficial effect that the power dissipated in the power lines contributes to the production of infrared radiation. Suitable electric connecting means, such as a mating plug and socket type connectors, are well known to those skilled in the art of electrical engineering.

The advantage of the embodiments having an elongated housing as disclosed above is mainly reflected in the way the device needs to be produced. It is no longer necessary that for each application of the device tailored lengths of the elongated bearers and housings have to be manufactured. The embodiments provide the possibility to produce housings and bearers of a certain uniform or standardized lengths, which, by virtue of their scalability, may be deployed for different applications.

In another example, at least one or all of the housing, the bearer and the core material are produced from flexible, for example bendable, material. The advantage of this example is, among others, that the infrared radiation devices do not need to be produced according to a plurality of predetermined shapes. The shape of the infrared radiation device may be altered during placement, i.e. installation of the device, due to its flexibility. Suitable materials are, for example, electrically isolating soft plastics for the housing and the core material and an electrically isolating foil material for the bearer.

In an example of the invention, the bearer is an electrically isolating foil bearing a plurality of spaced apart electric conductors. The advantage of a foil having spaced apart electric conductors is mainly two-fold. First, a foil has the advantageous property that its deformable such that the core material can easily hold the foil in good and tight mechanical contact to the wall of the housing from the inner opening thereof. Second, the spaced apart electric conductors provide for an efficient use of the available surface of the foil in terms of heat and infrared radiation, as the inventors realized that multiple conductors may be used as long as they are electrically isolated, i.e. spaced apart.

In yet another example, the circumferential wall of the housing is of an electrically isolating material. This, in combination with an electrically isolated foil, provides a possibility for an infrared radiation device, wherein the foil at one side bears the plurality of spaced apart electric conductors, and wherein the electric conductors are arranged opposite the circumferential wall of the elongated housing. In such a case, the electric conductors are electrically shielded at one side by the electrically isolating foil, and at the other side by the electrically isolating housing. This has the beneficial effect that electrical hazards are prevented as the electric conductors can not be touched, while the foil may have particular physical properties for reflecting or transmitting or blocking a spectral range of infrared radiation.

In yet another example, wherein the foil at one side bears the plurality of spaced apart electric conductors, the electrically isolating foil is substantially not transmissive for infrared radiation emitted in the Mid Infrared Region, MIR, in particular for infrared radiation emitted in a range of 6000 - 14000 nm. The foil may reflect some of the infrared radiation generated towards the elongated housing. This has the advantage that mainly all of the emitted energy, i.e. the infrared radiation, is focussed in the direction of the wall of the elongated housing, thereby maintaining a high efficiency standard and reduced absorption of infrared radiation by the foil and/or the core material.

In an even further example, the infrared radiation device comprises an electric power control for controlling the power applied to the radiation element for emitting infrared radiation in the Mid Infrared Region, in particular for emitting infrared radiation having a wavelength in a range of 6000 - 14000 nm. The inventors realized that the wavelength of the infrared radiation emitted by the infrared radiation device is dependent on the electric power applied to the radiation element. By adjusting the power, the radiated infrared spectrum, i.e. the wavelengths of the generated radiation, are controlled.

In a second aspect, the invention provides for the use of the infrared radiation device for growing plants, including any of flowers, vegetables or fruits. The inventors noted that the use of a infrared radiation device according to the invention has an advantageous effect on the growth of the abovementioned plants. The infrared radiation device may also be used under the soil or under a soil bed at which the plants grow, such as bed of asparagus.

In an example, the infrared radiation device is used in a method for infrared radiation of a subject, wherein the device is placed in direct or indirect contact with a body of the subject. It is the insight of the inventors that the infrared radiation emitted by the infrared radiation device is beneficial for a plurality of objects, as long as the emitted infrared energy is at least partly emitted towards the object. In other words, the infrared radiation device is then directly or indirectly in contact with the body of the subject.

In a third aspect, the invention provides for a method of manufacturing an infrared radiation device, comprising an electrically isolating bearer having a plurality of electric conductors forming an electric resistance radiation element for emitting infrared radiation when powered by an electric power source, and a housing having a circumferential wall of fluid tight material enclosing an inner opening.

The method comprises the steps of positioning the bearer in the inner opening of the housing such that the bearer extends in the housing along at least part of the wall of the housing in circumferential direction thereof, and filling up the inner opening of the housing by a core material such that the core material extends in the housing and the core material holds the bearer in mechanical contact against at least part of the wall of the housing in circumferential direction thereof.

In another embodiment of the method of the invention, comprising an elongated housing, the core material is stretchable in longitudinal direction thereof, wherein the core material and the inner opening of the housing have identical shaped cross-sections, wherein the cross-section of the core material in non-stretched condition has a larger dimension than the cross-section of the inner opening of the housing.

The step of filling up the inner opening of the housing by the core material comprises reducing the cross-section of the core material in dimension below the cross-section of the housing by stretching the core material in longitudinal direction thereof, positioning the stretched core material in the inner opening of the housing, and releasing the stretching of the core material such that the core material in non-stretched condition exerts a mechanical force in radial direction thereof holding the bearer in mechanical contact against at least part of the wall of the housing in circumferential direction thereof.

In an even further example, the bearer is an electrically isolating foil bearing a plurality of spaced apart electric conductors.

The invention will now be explained in more detail with reference to the appended figures, which merely serve by way of illustration of the invention and which may not be construed as being limitative thereto.

### Brief Description of the Drawings

Fig. 1 a shows, in a schematic form, not to scale, a front view of an example of an infrared radiation device according to the invention.
Fig. 1b shows, in a schematic form, an end view of the example of the infrared radiation device shown in Fig. 1 a.
Fig. 2 shows, in a schematic form, not to scale, an example of an electric resistance heating comprising an electrically isolating bearer having a plurality of electric conductors for use in an infrared radiation device according to the invention.
Fig. 3 shows, in a schematic form, infrared radiation spectra of an example of infrared radiation device according to the invention.
Fig. 4 shows, in a schematic cross-section view, not to scale, a typical application of an infrared radiation device according to the invention for the growing of asparagus plants.

### Detailed Description

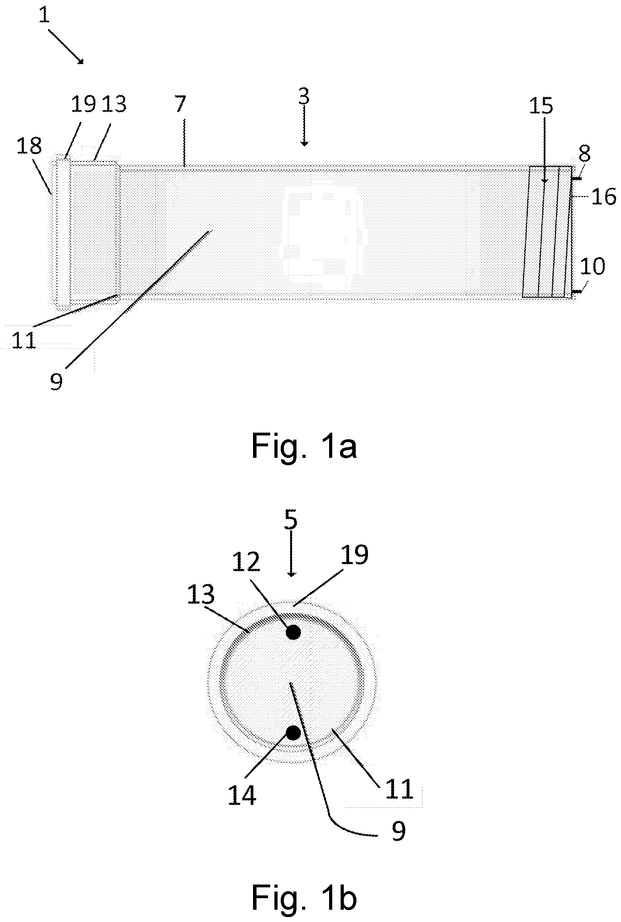

Figures 1 a and 1 b show, in a schematic form, not to scale, a front view 3 in longitudinal direction and an end view 5, respectively, of an example of an elongated infrared radiation device 1 according to the invention.

The infrared radiation device 1 comprises an elongated housing 7 such as a tube or pipe, having a circle circumferential wall of fluid tight material enclosing an elongated inner opening.

In the embodiment shown, the infrared radiation device 1 comprises an elongated electrically isolating bearer or carrier or support 11, which is bearing a plurality of electric conductors thereby forming an electric resistance radiation element for emitting infrared radiation when powered by an electric power source (not shown). In the example shown, the bearer 11 is an electrically isolating foil, having flexible and bendable mechanical properties.

The bearer 11 and a core material 9 are received in the inner opening of the housing 7 such that the core material 9 and the bearer 11 extend in the longitudinal direction along the length or part of the length of the housing 7. The core material 9 holds the bearer 11 in mechanical contact with the inner wall of the housing 7 in circumferential direction thereof, by filling up the inner opening of the housing 7.

Different from the embodiment of the radiation device 1 shown in Figures 1 a and 1 b, the bearer 11 may be hold against part of the inner wall of the housing 7 seen in circumferential direction thereof. For example, for certain applications it may not be necessary to emit radiation omnidirectionally, but the radiation should be directed, i.e. bundled, to radiate a certain subject or object, or part thereof. In such a case, it may be sufficient to place the bearer 11 against the length of the inner wall of the housing 7 at only a part of the circumferential inner wall, such that infrared radiation is emitted in a certain geographical direction.

In the present example, the device 1 further comprises mating fluid-tight coupling means for coupling, i.e. cascading, multiple devices 1. In the present example, the fluid tight coupling is arranged as a mating fluid-tight screw-thread coupling, comprising an outer thread 15 at a first end 16 of the housing 7 and a receiving opening 13 comprising a coupling nut 19 having an inner thread at a second end 18 of the housing 7, for receiving and mating with a first threaded end 16 of a further device 7. A person skilled in the art will appreciate that several types of suitable fluid-tight coupling means are available, such as bayonet couplings or mating first and second ends 16, 18 equipped to be connected by gluing or the like.

Reference numerals 8, 10 and 12, 14 at the first end 16 and the second end 18 of the housing 7, respectively, refer to electrical connecting means for electrically connecting power lines of electric resistance radiation elements 11 of adjacent, cascaded devices 1. The connecting means 8, 10 may comprise electrical plug type connecting means and the connecting means 12, 14 may comprise mating electrical socket type connecting means, for example. A person skilled in the art will appreciate that several types of electrical coupling means may be used, such as electrical bayonet type or sliding type coupling means, for example, preferably adapted to the type of fluid tight coupling means.

Fluid-tightness at the first 16 and second end 18 of the device 1, is obtained, in an embodiment, in that the core material 9 is in close and tight mechanical contact with the bearer 11 and the inner wall of the housing 7. It will be appreciated that the housing 7 may be closed at one or both the first end 16 and the second end 18 using suitable closure means (not shown). In the embodiment shown, mating threaded closure means may be used, arranged to provide a fluid-tight closure. In another example, fluid tightness of the housing of the infrared radiation device may be formed by, at least, a fluid tight bearer.

The infrared radiation device 1 in the present example is suitable for being installed in the ground or in the open air, for example, as the housing 7 is constructed fluid-tight, in particular liquid-tight, such as water-tight to prevent short circuiting or other detrimental electric effects. Due to its fluid-tight construction, the infrared radiation device 1 is safe to use in contact with the human or animal body. In particular when the housing of the device 1 is manufactured from an electrically isolating material, such as an electrically isolating plastic material like polyvinyl chloride, commonly abbreviated PVC, polyethylene, PE, polypropylene, PPE, or other suitable plastics, for example plastic that is heat resistant to a certain extend.

An advantage of the infrared radiation device 1, compared to radiation devices like heat water pipes, for example, is that the infrared radiation emitted by the device 1 does not fluctuate over the length, i.e. the longitudinal direction, of the housing 7. This makes the radiation device 1 in particular very effective for use as an infrared radiation source for subjecting many different types of relatively large objects to infrared radiation and heat, such as plants like vegetables, fruits and bushes, but also sports fields, (rail)roads, pavements, etc.

The core material filling up the inner opening of the housing may comprise one or more through holes forming an inner opening of the core material, however, such that the bearer is held in mechanical contact with the inner wall of the houding. In an embodiment, for heating a fluid, for example water, the core material may comprise one or more through holes for passing the fluid. Such a hollow passage in the core material may be advantageous for efficiency reasons, i.e. heat absorbed by the core material is used for heating the fluid. In such a case, fluid-tightness may be achieved by using a fluid-tight core material and end couplings for mechanically connecting a plurality of housings.

In yet another embodiment the core is completely filling up the inner opening of the housing, such that no room or hole is present.

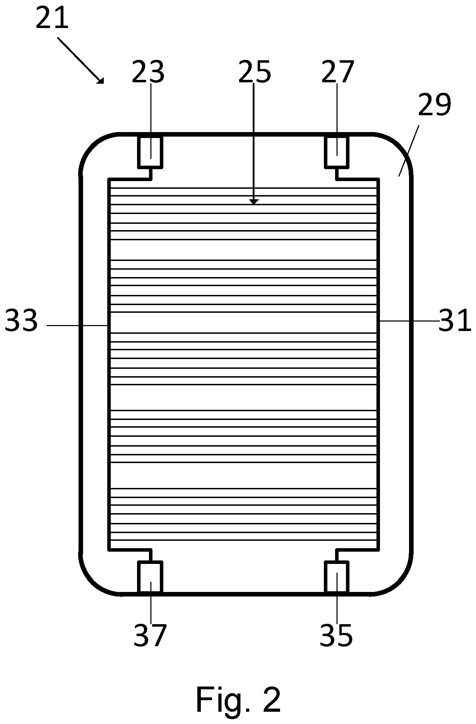

Figure 2 shows, in a schematic form, an example of a resistance radiation element 21 for use in an infrared radiation device according to the invention.

The resistance radiation element 21 comprises a bearer or carrier or support 29 of electrically isolating material such as PVC, PE, PPE, or other suitable plastics, for example plastics that are heat resistant to a certain extend, bearing or carrying or supporting a plurality of spaced apart electric conductors 25 parallel connected between two power lines 31, 33 one of which is a feeder line 33 and the other is a return line 31, for example.

When powered by an electric power source, such that an electric current flows from the feeder line 33 via the conductors 25 to the return line 31, the dissipated energy by the conductors 25 and/or the power lines 31, 33 is converted to infrared radiation, IR.

A person skilled in the art will appreciate that the amount of radiation and the wavelength of the infrared radiation emitted, depends on the power applied and dissipated by the electric resistance radiation element 21. The radiation element 21, i.e. the electric conductors 25 thereof, may be suitably constructed and dimensioned to operate at wide variety of electric voltages and currents, for example at AC or DC voltages of 12 volts, 24 volts, 48 volts, 110 volts, 230 volts, 400 volts or even higher. In case high voltages are used to provide the power to the radiation element 21, the housing of the radiation device should be made of an electrically isolating material, whereas the radiation element 29 is arranged inside the housing, such that the conductors 25 and power lines 31, 33 arranged at one side of the bearer 29 face or are opposite the isolating inner wall of the housing, for safety reasons.

A person skilled in the art will appreciate that the width of the power lines 33, 31 is directly related to the voltage drop of the lines 31, 33 in the elongated direction. In case the device 1 is to be used in applications wherein a relative long distance is to be covered, either by the device itself or by a plurality of interconnected or cascaded devices, wider power lines 31, 33 are to be used compared to situations wherein only a relatively small distance is to be covered.

In an embodiment, the electrically isolating bearer 29 is further equipped with mating electrical connecting means 23, 27, 35, 37 for electrically connecting the power lines 31, 33 at a first end 16 of the housing 7 of a first radiation device 1 with power lines 31, 33 at a second end 18 of the housing 7 a second radiation device 1. For example for electrically connecting the power lines 31, 33 to the electrical connecting means 8, 10, 12, 14.

In an embodiment of the invention, in particular for adjusting the wavelength of the infrared radiation emitted by the resistance heating element 21, the infrared radiation device comprises an adjustable or controllable electric power control for controlling the power applied to the radiation element 21. In particular for emitting infrared radiation in the Mid Infrared Region, MIR, in particular for emitting infrared radiation having a wavelength in a range of about 6000 - 14000 nm.

To avoid emission in the direction of the core material, i.e. to provide as much as possible radiation in a direction away from the housing 7, the bearer 29, in particular in the case of a bearer 29 comprised by an electrically isolating foil, preferably is substantially not transmissive for infrared radiation emitted in the MIR, in particular for infrared radiation emitted in the range of about 6000 - 14000 nm.

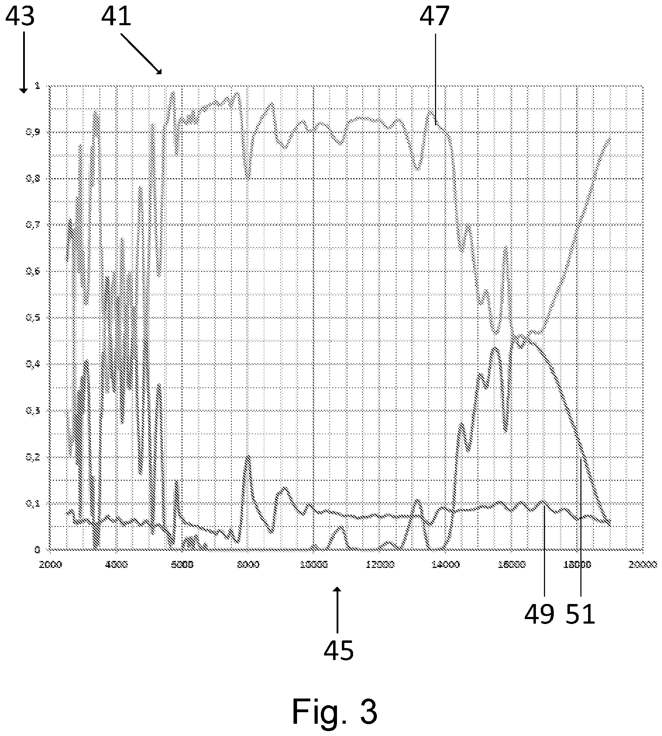

By way of example, figure 3 shows infrared radiation spectra 41 of an infrared radiation device according to the invention for the above mentioned MIR range from about 6000 nm to 14000 nm having a radiation element 21 shown in figure 2.

On the horizontal axis 45, there is plotted the wavelength of the infrared radiation, measured in nanometres, nm, while on the vertical axis 43 there is plotted the amount or energy of infrared radiation, in a relative measure normalized to the maximum energy level emitted.

Graph 47 indicates the amount or strength of the infrared radiation emitted by the radiation device. Graph 51 depicts the transmissive properties of the bearer, i.e. the foil, of the radiation element 21 used. Graph 49 shows the reflectance properties of the bearer, i.e. the foil, of the radiation element 21 used.

In the range depicted, the bearer 21 is substantially non-transmissive for infrared radiation, such that nearly no infrared radiation is wasted in the core material of an infrared radiation device.

An infrared radiation device operating in the MIR range may be used in a method for infrared radiation of a subject, wherein the device is placed in direct or indirect contact with a body of the subject.

The radiation device shown in figures 1 a and 1 b is very suitable for use in growing plants including any of flowers, vegetables, or fruits. The device 1 may be arranged in/under the ground or soil at which the plants grow, or in/under a soil bed at which the plants grow.

In another example, the ground or soil is heated to, for example, about 60-80 degrees Celsius to kill pathogens present in the ground or soil. In such a case, the infrared heating device may consume, for example, a power of about 40 Watts per meter of the extended housing.

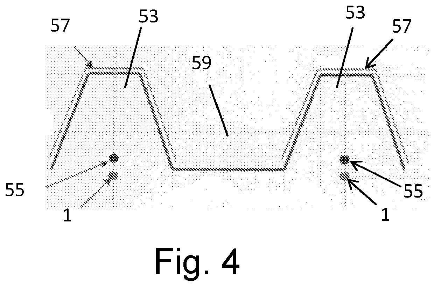

Figure 4 shows, in a schematic cross-section view, not to scale, typical soil beds 53 extending above the natural soil 59, for growing asparagus plants 55. The soil beds 53 extend transverse to the plane of the drawing and are covered by a plastic cover 57.

In accordance with the invention, cascaded infrared radiation devices 1 shown in figures 1a and 1b are positioned below the plants 55, when viewed from the natural soil 59, extending transverse to the plane of the drawing, to provide an amount of infrared radiation to the plants 55, as a result of which the grow of the plants 55 is stimulated.

In a similar manner, cascaded radiation devices may be placed under roads, pavements and the like, to prevent icing, for example. In practice, an electric power consumption of 10, 20, or 30 Watt per meter length is sufficient for the above-mentioned applications.

The radiation device according to the invention is not limited to housings having a circle cylindrical cross-section. To the contrary, the construction is excellently suitable for use with housings have any type of cross-section, such as rectangular, polygonal, elliptical, and so on. The resistance radiation element may be formed by other types of bearer or support or carrier than a foil, for example a flat cable type resistance radiation element.

The invention also provides a method of manufacturing an infrared radiation device, comprising the steps of:
- positioning the bearer in the inner opening of the housing such that the bearer extends in the housing along at least part of the wall of the housing in circumferential direction thereof, and
- filling up the inner opening of the housing by a core material such that the core material extends in the housing and the core material holds the bearer in mechanical contact against at least part of the wall of the housing in circumferential direction thereof.

In a particular advantageous manufacturing method according to the invention, comprising an elongated housing, core material is used that is stretchable in longitudinal direction thereof. The core material and the inner opening of the housing have similar shaped cross-sections, wherein the cross-section of the core material in non-stretched condition has a larger dimension than the cross-section of the inner opening of the housing. The step of filling up the inner opening of the housing by the core material comprises:
- reducing the cross-section of the core material in dimension below the cross-section of the housing by stretching the core material in longitudinal direction thereof,
- positioning the stretched core material in the inner opening of the housing, such that the core material extends in longitudinal direction of the elongated housing, and
- releasing the stretching of the core material such that the core material in non-stretched condition exerts a mechanical force in radial direction thereof holding the bearer in mechanical contact against at least part of the wall of the housing in circumferential direction thereof.

This method provides a very tight mechanical contact of the core material, the bearer and the inner wall of the housing, in particular a fluid-tight contact.

Those skilled in the art will appreciate that the radiation device according to the invention may be manufactured by other methods than disclosed above.

## Claims

1. An infrared radiation device, comprising an electrically isolating bearer (21) having a plurality of electric conductors (25) forming an electric resistance radiation element for emitting infrared radiation when powered by an electric power source, a housing (7) having a circumferential wall of fluid tight material enclosing an inner opening, **characterized in that** said bearer (21) and a core material (9) are received in said inner opening of said housing (7) such that said core (9) and said bearer (21) extend in said housing (7) and said core material (9) by filling up said inner opening of said housing (7) holds said bearer in mechanical contact with at least part of said wall of said housing (7) in circumferential direction thereof.

2. The infrared radiation device according to claim 1 , comprising an elongated housing (7) having a first end (16) and a second end (18), wherein said bearer (21) and said core (9) material extend in longitudinal direction of said elongated housing (7) and said first end and said second end (16,18) comprise mating fluid-tight coupling means (15,18,19) for fluid- tight coupling of a first end of said housing (7) of a first infrared radiation device (1) and a second end of said housing of a second infrared radiation device (1).

3. The infrared radiation device according to claim 2, wherein said isolating bearer (21) comprises first and second power lines (31,33) for powering said plurality of electric conductors (25), wherein said first end and said second end (16,18) of said housing (7) comprise mating electrical connecting means (8,10,12,14) connected to respective power lines (31,33) of a bearer (21), for electrically connecting said power lines (31,33) at a first end (16) of said housing (7) of a first radiation device with said power lines at a second end (18) of said housing (7) of a second radiation device (1).

4. The infrared radiation device according to any of the previous claims, wherein said circumferential wall of said housing (7) is of an electrically isolating material.

5. The infrared radiation device according to any of the previous claims, wherein at least one of said housing (1), said bearer (21) and said core material (9) are of a flexible material.

6. The infrared radiation device according to claim 5, wherein said bearer (21) is an electrically isolating foil (29) bearing a plurality of spaced apart electric conductors (25).

7. The infrared radiation device according to claim 6, wherein said foil (29) at one side thereof bears said plurality of spaced apart electric conductors (25), and wherein said electric conductors (25) are arranged opposite said circumferential wall of said housing (7).

8. The infrared radiation device according to claim 7, wherein said electrically isolating foil (29) is substantially not transmissive for infrared radiation emitted in the Mid Infrared Region, in particular for infrared radiation emitted in a range of 6000 - 14000 nm.

9. The infrared radiation device according to any of the previous claims, further comprising an electric power control for controlling said power applied to said radiation element (1) for emitting infrared radiation in the Mid Infrared Region, in particular for emitting infrared radiation having a wavelength in a range of 6000 - 14000 nm.

10. Use of the infrared radiation device according to any of the previous claims for growing plants including any of flowers, vegetables, or fruits.

11. Use of the infrared radiation device according to any of the claims 1 to 9 under the soil or under a soil bed at which the plants grow.

12. Use of the infrared radiation device according to any of the claims 1 to 9 in a method for infrared radiation of a subject, wherein the device is placed in direct or indirect contact with a body of said subject.

13. A method of manufacturing an infrared radiation device according to any of the claims 1 to 9, comprising an electrically isolating bearer (21) having a plurality of electric conductors (25) forming an electric resistance radiation element for emitting infrared radiation when powered by by an electric power source, and a housing (7) having a circumferential wall of fluid tight material enclosing an inner opening, said method **characterized in that** it comprises the steps of:
- positioning said bearer (9) in said inner opening of said housing (7) such that said bearer (21) extends in said housing (7) along at least part of said wall of said housing (7) in circumferential direction thereof, and
- filling up said inner opening of said housing (7) by a core material (9) such that said core material (9) extends in said housing (7) and said core material (7) holds said bearer (21) in mechanical contact against at least part of said wall of said housing in circumferential direction thereof.

14. The method according to claim 13, comprising an elongated housing (7), wherein said core material (9) is stretchable in longitudinal direction thereof, said core material (9) and said inner opening of said housing (7) have similar shaped cross- sections, wherein said cross-section of said core material (9) in non-stretched condition has a larger dimension than said cross-section of said inner opening of said housing (7), wherein said step of filling up said inner opening of said housing (7) by said core material (9) comprises:
- reducing said cross-section of said core material (9) in dimension below said cross-section of said housing (7) by stretching said core material (9) in longitudinal direction thereof,
- positioning said stretched core material in said inner opening of said housing (7), such that said core material (9) extends in longitudinal direction of said elongated housing (7), and
- releasing said stretching of said core material (9) such that said core material in non-stretched condition exerts a mechanical force in radial direction thereof holding said bearer (21) in mechanical contact against at least part of said wall of said housing (7) in circumferential direction thereof.

15. The method according to claim 13 or 14, wherein said bearer (21) is an electrically isolating foil (29) bearing a plurality of spaced apart electric conductors (25).

## Patentansprüche

1. Infrarotstrahlungsvorrichtung mit einem elektrisch isolierenden Träger (21), der mehrere elektrische Leiter (25) aufweist, die ein elektrisches Widerstandsstrahlungselement zum Emittieren von Infrarotstrahlung bilden, wenn sie von einer elektrischen Stromquelle versorgt werden, einem Gehäuse (7) mit einer Umfangswand aus fluiddichtem Material, das eine Innenöffnung umschließt, **dadurch gekennzeichnet, dass** der Träger (21) und ein Kernmaterial (9) in der Innenöffnung des Gehäuses (7) so aufgenommen sind, dass der Kern (9) und der Träger (21) im Gehäuse (7) verlaufen und das Kernmaterial (9) durch Ausfüllung der Innenöffnung des Gehäuses (7) den Träger mit zumindest einem Teil der Wand des Gehäuses (7) in dessen Umfangsrichtung in mechanischem Kontakt hält.

2. Infrarotstrahlungsvorrichtung nach Anspruch 1, mit einem langgestreckten Gehäuse (7), das ein erstes Ende (16) und ein zweites Ende (18) aufweist, wobei der Träger (21) und das Kernmaterial (9) in Längsrichtung des langgestreckten Gehäuses (7) verlaufen und das erste Ende und das zweite Ende (16, 18) zusammenpassende fluiddichte Verbindungseinrichtungen (15, 18, 19) zur fluiddichten Verbindung eines ersten Endes des Gehäuses (7) einer ersten Infrarotstrahlungsvorrichtung (1) mit einem zweiten Ende des Gehäuses einer zweiten Infrarotstrahlungsvorrichtung (1) aufweisen.

3. Infrarotstrahlungsvorrichtung nach Anspruch 2, wobei der isolierende Träger (21) eine erste und eine zweite Stromleitung (31, 33) zur Stromversorgung der mehreren elektrischen Leiter (25) aufweist, wobei das erste Ende und das zweite Ende (16, 18) des Gehäuses (7) zusammenpassende elektrische Anschlusseinrichtungen (8, 10, 12, 14) aufweisen, die an jeweilige Stromleitungen (31, 33) eines Trägers (21) angeschlossen und dazu vorgesehen sind, die Stromleitungen (31, 33) an einem ersten Ende (16) des Gehäuses (7) einer ersten Strahlungsvorrichtung mit den Stromleitungen an einem zweiten Ende (18) des Gehäuses (7) einer zweiten Strahlungsvorrichtung (1) elektrisch zu verbinden.

4. Infrarotstrahlungsvorrichtung nach einem der vorhergehenden Ansprüche, wobei die Umfangswand des Gehäuses (7) aus einem elektrisch isolierenden Material besteht.

5. Infrarotstrahlungsvorrichtung nach einem der vorhergehenden Ansprüche, wobei das Gehäuse (1) und/oder der Träger (21) und/oder das Kernmaterial (9) aus einem flexiblen Material bestehen.

6. Infrarotstrahlungsvorrichtung nach Anspruch 5, wobei der Träger (21) eine elektrisch isolierende Folie (29) ist, die mehrere voneinander beabstandete elektrische Leiter (25) trägt.

7. Infrarotstrahlungsvorrichtung nach Anspruch 6, wobei die Folie (29) auf einer Seite die mehreren voneinander beabstandeten elektrischen Leiter (25) trägt, und wobei die elektrischen Leiter (25) der Umfangswand des Gehäuses (7) gegenüberliegend angeordnet sind.

8. Infrarotstrahlungsvorrichtung nach Anspruch 7, wobei die elektrisch isolierende Folie (29) für im mittleren Infrarotbereich emittierte Infrarotstrahlung, insbesondere für in einem Bereich von 6000 bis 14000 nm emittierte Infrarotstrahlung im Wesentlichen nicht durchlässig ist.

9. Infrarotstrahlungsvorrichtung nach einem der vorhergehenden Ansprüche, darüber hinaus mit einer elektrischen Leistungssteuerung zum Steuern der an das Strahlungselement (1) zum Emittieren von Infrarotstrahlung im mittleren Infrarotbereich angelegten Leistung, insbesondere zum Emittieren von Infrarotstrahlung mit einer Wellenlänge in einem Bereich von 6000 bis 14000 nm.

10. Verwendung der Infrarotstrahlungsvorrichtung nach einem der vorhergehenden Ansprüche zum Ziehen von Pflanzen, einschließlich Blumen, Gemüse oder Früchte.

11. Verwendung der Infrarotstrahlungsvorrichtung nach einem der Ansprüche 1 bis 9 unter der Erde oder unter einer Erdaufschüttung, in der die Pflanzen wachsen.

12. Verwendung der Infrarotstrahlungsvorrichtung nach einem der Ansprüche 1 bis 9 in einem Verfahren zur Infrarotbestrahlung eines Gegenstands, wobei die Vorrichtung in direktem oder indirektem Kontakt mit der Masse des Gegenstands angeordnet wird.

13. Verfahren zur Herstellung einer Infrarotstrahlungsvorrichtung nach einem der Ansprüche 1 bis 9, mit einem elektrisch isolierenden Träger (21) mit mehreren elektrischen Leitern (25), die ein elektrisches Widerstandsstrahlungselement zum Emittieren von Infrarotstrahlung bilden, wenn sie von einer elektrischen Stromquelle versorgt werden, und einem Gehäuse (7) mit einer Umfangswand aus fluiddichtem Material, das eine Innenöffnung umschließt, wobei das Verfahren **dadurch gekennzeichnet ist, dass** es die folgenden Schritte umfasst:
- Anordnen des Trägers (9) in der Innenöffnung des Gehäuses (7), derart, dass sich der Träger (21) im Gehäuse (7) entlang zumindest einem Teil der Wand des Gehäuses (7) in dessen Umfangsrichtung erstreckt, und
- Ausfüllen der Innenöffnung des Gehäuses (7) mit einem Kernmaterial (9), derart, dass sich das Kernmaterial (9) im Gehäuse (7) erstreckt und das Kernmaterial (9) den Träger (21) mit zumindest einem Teil der Wand des Gehäuses in dessen Umfangsrichtung in mechanischem Kontakt hält.

14. Verfahren nach Anspruch 13, mit einem langgestreckten Gehäuse (7), wobei das Kernmaterial (9) in dessen Längsrichtung gestreckt werden kann, wobei das Kernmaterial (9) und die Innenöffnung des Gehäuses (7) ähnlich geformte Querschnitte aufweisen, wobei der Querschnitt des Kernmaterials (9) in einem nicht gestreckten Zustand eine größere Abmessung hat als der Querschnitt der Innenöffnung des Gehäuses (7), wobei der Schritt des Ausfüllens der Innenöffnung des Gehäuses (7) durch das Kernmaterial (9) umfasst:
- Reduzieren des Querschnitts des Kernmaterials (9) in seiner Abmessung bis unter den Querschnitt des Gehäuses (7) durch Strecken des Kernmaterials (9) in dessen Längsrichtung,
- Anordnen des gestreckten Kernmaterials in der Innenöffnung des Gehäuses (7), derart, dass sich das Kernmaterial (9) in Längsrichtung des langgestreckten Gehäuses (7) erstreckt, und
- Lösen der Streckung des Kernmaterials (9), derart, dass das Kernmaterial im nicht gestreckten Zustand eine mechanische Kraft in dessen radialer Richtung ausübt, die den Träger (21) mit zumindest einem Teil der Wand des Gehäuses (7) in dessen Umfangsrichtung in mechanischem Kontakt hält.

15. Verfahren nach Anspruch 13 oder 14, wobei der Träger (21) eine elektrisch isolierende Folie (29) ist, die mehrere voneinander beabstandete elektrische Leiter (25) trägt.

## Revendications

1. Dispositif de rayonnement infrarouge, comprenant un support électriquement isolant (21) ayant une pluralité de conducteurs électriques (25) formant un élément de rayonnement à résistance électrique pour émettre un rayonnement infrarouge lorsqu'il est alimenté par une source de puissance électrique, un logement (7) ayant une paroi circonférentielle de matériau étanche aux fluides renfermant une ouverture interne, **caractérisé en ce que** ledit support (21) et un matériau de noyau (9) sont reçus dans ladite ouverture interne dudit logement (7) de sorte que ledit noyau (9) et ledit support (21) s'étendent dans ledit logement (7) et que ledit matériau de noyau (9), par remplissage de ladite ouverture interne dudit logement (7), maintienne ledit support en contact mécanique avec au moins une partie de ladite paroi dudit logement (7) dans une direction circonférentielle de celle-ci.

2. Dispositif de rayonnement infrarouge selon la revendication 1, comprenant un logement allongé (7) ayant une première extrémité (16) et une deuxième extrémité (18), où ledit support (21) et ledit matériau de noyau (9) s'étendent dans une direction longitudinale dudit logement allongé (7) et ladite première extrémité et ladite deuxième extrémité (16, 18) comprennent des moyens d'accouplement étanche aux fluides conjugués (15, 18, 19) pour un accouplement étanche aux fluides d'une première extrémité dudit logement (7) d'un premier dispositif de rayonnement infrarouge (1) et d'une deuxième extrémité dudit logement d'un deuxième dispositif de rayonnement infrarouge (1).

3. Dispositif de rayonnement infrarouge selon la revendication 2, dans lequel ledit support isolant (21) comprend des première et deuxième lignes d'alimentation (31, 33) pour alimenter ladite pluralité de conducteurs électriques (25), où ladite première extrémité et ladite deuxième extrémité (16, 18) dudit logement (7) comprennent des moyens de connexion électrique conjugués (8, 10, 12, 14) reliés à des lignes d'alimentation respectives (31, 33) d'un support (21), pour relier électriquement lesdites lignes d'alimentation (31, 33) au niveau d'une première extrémité (16) dudit logement (7) d'un premier dispositif de rayonnement auxdites lignes d'alimentation au niveau d'une deuxième extrémité (18) dudit logement (7) d'un deuxième dispositif de rayonnement (1).

4. Dispositif de rayonnement infrarouge selon l'une des revendications précédentes, dans lequel ladite paroi circonférentielle dudit logement (7) est réalisée en un matériau électriquement isolant.

5. Dispositif de rayonnement infrarouge selon l'une des revendications précédentes, dans lequel au moins l'un dudit logement (1), dudit support (21) et dudit matériau de noyau (9) est réalisé en un matériau flexible.

6. Dispositif de rayonnement infrarouge selon la revendication 5, dans lequel ledit support (21) est une feuille électriquement isolante (29) portant une pluralité de conducteurs électriques espacés (25).

7. Dispositif de rayonnement infrarouge selon la revendication 6, dans lequel ladite feuille (29) porte, au niveau d'un côté de celle-ci, ladite pluralité de conducteurs électriques espacés (25), et dans lequel lesdits conducteurs électriques (25) sont agencés de manière opposée à ladite paroi circonférentielle dudit logement (7).

8. Dispositif de rayonnement infrarouge selon la revendication 7, dans lequel ladite feuille électriquement isolante (29) est essentiellement non transmissive pour un rayonnement infrarouge émis dans la Région Infrarouge Moyen, en particulier pour un rayonnement infrarouge émis dans une plage allant de 6000 à 14000 nm.

9. Dispositif de rayonnement infrarouge selon l'une des revendications précédentes, comprenant en outre une commande de puissance électrique pour commander ladite puissance appliquée audit élément de rayonnement (1) pour émettre un rayonnement infrarouge dans la Région Infrarouge Moyen, en particulier pour émettre un rayonnement infrarouge ayant une longueur d'onde se trouvant dans une plage allant de 6000 à 14000 nm.

10. Utilisation du dispositif de rayonnement infrarouge selon l'une des revendications précédentes pour faire pousser des plantes y compris des fleurs, des légumes ou des fruits.

11. Utilisation du dispositif de rayonnement infrarouge selon l'une des revendications 1 à 9 sous le sol ou sous un lit de sol auquel les plantes poussent.

12. Utilisation du dispositif de rayonnement infrarouge selon l'une des revendications 1 à 9 dans un procédé pour exposer un sujet au rayonnement infrarouge, où le dispositif est placé en contact direct ou indirect avec un corps dudit sujet.

13. Procédé de fabrication d'un dispositif de rayonnement infrarouge selon l'une des revendications 1 à 9, comprenant un support électriquement isolant (21) ayant une pluralité de conducteurs électriques (25) formant un élément de rayonnement à résistance électrique pour émettre un rayonnement infrarouge lorsqu'il est alimenté par une source de puissance électrique, et un logement (7) ayant une paroi circonférentielle de matériau étanche aux fluides renfermant une ouverture interne, ledit procédé étant **caractérisé en ce qu'**il comprend les étapes consistant :
- à positionner ledit support (9) dans ladite ouverture interne dudit logement (7) de sorte que ledit support (21) s'étende dans ledit logement (7) le long d'au moins une partie de ladite paroi dudit logement (7) dans une direction circonférentielle de celle-ci, et
- à remplir ladite ouverture interne dudit logement (7) d'un matériau de noyau (9) de sorte que ledit matériau de noyau (9) s'étende dans ledit logement (7) et ledit matériau de noyau (7) maintienne ledit support (21) en contact mécanique contre au moins une partie de ladite paroi dudit logement dans une direction circonférentielle de celle-ci.

14. Procédé selon la revendication 13, comprenant un logement allongé (7), où ledit matériau de noyau (9) est étirable dans une direction longitudinale de celui-ci, ledit matériau de noyau (9) et ladite ouverture interne dudit logement (7) ont des sections transversales de forme similaire, où ladite section transversale dudit matériau de noyau (9) dans l'état non étiré a une dimension supérieure à celle de ladite section transversale de ladite ouverture interne dudit logement (7), où ladite étape de remplissage de ladite ouverture interne dudit logement (7) dudit matériau de noyau (9) comprend le fait :
- de réduire la dimension de ladite section transversale dudit matériau de noyau (9) de manière à être inférieure à celle de ladite section transversale dudit logement (7) par étirement dudit matériau de noyau (9) dans une direction longitudinale de celui-ci,
- de positionner ledit matériau de noyau étiré dans ladite ouverture interne dudit logement (7), de sorte que ledit matériau de noyau (9) s'étende dans la direction longitudinale dudit logement allongé (7), et
- de libérer ledit étirement dudit matériau de noyau (9) de sorte que ledit matériau de noyau dans l'état non étiré exerce une force mécanique dans une direction radiale de celui-ci maintenant ledit support (21) en contact mécanique contre au moins une partie de ladite paroi dudit logement (7) dans une direction circonférentielle de celle-ci.

15. Procédé selon la revendication 13 ou 14, dans lequel ledit support (21) est une feuille électriquement isolante (29) portant une pluralité de conducteurs électriques espacés (25).
